(19) Europäisches Patentamt European Patent Office Office européen des brevets

(11) **EP 2 216 658 B1**

(12) **FASCICULE DE BREVET EUROPEEN**

(45) Date de publication et mention
de la délivrance du brevet:
**13.07.2011 Bulletin 2011/28**

(51) Int Cl.:
***G01S 3/28*** (2006.01)

(21) Numéro de dépôt: **10150738.2**

(22) Date de dépôt: **14.01.2010**

(54) **Procédé et système de mesure du sens de rotation d'une antenne directive rayonnant une émission**

Verfahren und System zur Messung der Drehrichtung einer Richtantenne, die eine Sendung ausstrahlt

Method and system for measuring the direction of rotation of a directional antenna irradiating a transmission

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **10.02.2009 FR 0900573**

(43) Date de publication de la demande:
**11.08.2010 Bulletin 2010/32**

(73) Titulaire: **Thales**
**92200 Neuilly Sur Seine (FR)**

(72) Inventeurs:
• **Jahan, Daniel**
**29820 Bohars (FR)**
• **Borrel, Patrick**
**29280 Plouzane (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A1- 2001 000 123**

• **FILIPOVIC D F ET AL: "An azimuthal omni-directional array for multi-target acquisition and tracking" PROCEEDINGS OF THE ANTENNAS AND PROPAGATION SOCIETY INTERNATIONAL SYMPOSIUM (APSIS). CHICAGO, JULY 20 - 24, 1992; [PROCEEDINGS OF THE ANTENNAS AND PROPAGATION SOCIETY INTERNATIONAL SYMPOSIUM (APSIS)], NEW YORK, IEEE, US, vol. -, 18 juillet 1992 (1992-07-18), pages 637-640, XP010065824 ISBN: 978-0-7803-0730-8**

**Description**

La présente invention a pour objet un procédé et un système de mesure du sens de rotation d'une antenne directive rayonnant une émission. Elle concerne la problématique de caractérisation d'une antenne directive rayonnant un signal, par exemple une antenne de radar et plus particulièrement la mesure du sens de rotation de ladite antenne. Elle s'applique notamment aux dispositifs de détection de radars qui ont pour objectif de détecter, localiser et identifier les émissions électromagnétiques radar environnantes.

L'art antérieur US 2001/0000123 décrit une antenne dont la direction est contrôlable

Le but de l'invention est notamment de déterminer le sens de rotation d'une antenne rayonnante qui a été au préalable détectée dans l'environnement du dispositif de détection de radars.

Les techniques existantes permettant de caractériser une antenne directive rayonnante, et en particulier la direction d'arrivée du signal émis par cette antenne, sont basées sur l'emploi de goniomètres d'amplitude. Un système de goniométrie d'amplitude utilise un réseau d'antennes qui permet de mesurer la direction d'arrivée d'un signal émis grâce à l'exploitation du signal reçu sur les N antennes directives dudit réseau. Ces antennes sont situées dans le plan d'intérêt de la mesure de la direction d'arrivée, par exemple le plan horizontal ou le plan gisement. Elles sont, en général, disposées sur un cercle de rayon donné, par exemple de façon équirépartie.

L'utilisation d'un goniomètre d'amplitude de l'art antérieur permet de mesurer la direction d'arrivée du signal émis par une antenne rayonnante mais ne permet pas de caractériser le mouvement de l'antenne, en particulier son sens de rotation.

Afin de répondre à ce problème, l'invention met en oeuvre des moyens pour estimer le sens de rotation de l'antenne à partir des résultats obtenus par un goniomètre d'amplitude. A cet effet, l'invention a notamment pour objet un procédé de mesure du sens de rotation d'une antenne directive rayonnant un signal, ledit signal étant reçu par un réseau comportant au moins deux antennes, sous forme d'impulsions aux instants $t_i$ respectifs, lesdites impulsions étant regroupées au sein d'un bloc cohérent contenant K impulsions, ledit procédé étant caractérisé en ce qu'il comporte au moins les étapes suivantes :

➢ déterminer, pour chaque impulsion reçue à l'instant $t_i$, une estimée $\hat{\theta}_0(t_i)$ de l'angle de direction d'arrivée $\theta_0$ du signal émis par ladite antenne directive à partir des puissances délivrées par les antennes dudit réseau,

➢ déterminer pour chaque valeur $\hat{\theta}_0(t_i)$ obtenue, sa

dérivée temporelle $\dfrac{d\hat{\theta}_0(t_i)}{dt}$,

➢ déterminer une estimée P de la pente de la droite $\theta_0(t)$ sur au moins un sous ensemble d'impulsions dudit bloc via le calcul de la moyenne des dérivées

temporelles $\dfrac{d\hat{\theta}_0(t_i)}{dt}$ obtenues précédemment :

$$P = \frac{1}{K} \sum_{i=0}^{K} \frac{d\hat{\theta}_0(t_i)}{dt},$$

➢ effectuer le test de décision suivant où S est un entier positif,

o Si P > S, le sens de rotation de ladite antenne directive est celui des $\theta_0$ décroissants,
o Si P < -S, le sens de rotation de la dite antenne directive est celui des $\theta_0$ croissants.

Dans une variante de réalisation de l'invention, les $\dfrac{d\hat{\theta}_0(t_i)}{dt}$ valeurs sont filtrées par un filtre passe-bas dont la fonction est de limiter le bruit.

Dans une variante de réalisation de l'invention, le procédé comporte en plus les étapes suivantes :

➢ déterminer, pour chaque impulsion reçue à l'instant $t_i$, une mesure du niveau $N(t_i)$ du signal reçu,
➢ déterminer pour chaque valeur $N(t_i)$ obtenue, sa

dérivée temporelle $\dfrac{dN(t_i)}{dt}$,

➢ remplacer chaque valeur de la dérivée temporelle

$\dfrac{d\hat{\theta}_0(t_i)}{dt}$ par sa version pondérée par la dérivée

temporelle du niveau $\dfrac{d\hat{\theta}_0(t_i)}{dt} \cdot \dfrac{dN(t_i)}{dt}$ avant

d'effectuer le calcul de moyenne permettant d'obtenir la quantité P.

Dans une variante de réalisation de l'invention, les antennes dudit réseau sont disposées sur un cercle de rayon donné et situé dans un plan de référence.

Dans une variante de réalisation de l'invention, les directions de pointage des antennes dudit réseau suivent une équirépartition angulaire.

L'invention a également pour objet un système de mesure du sens de rotation d'une antenne directive rayonnant un signal sous forme d'impulsions comportant au moins les éléments suivants, un réseau d'antennes, un dispositif de goniométrie d'amplitude, un analyseur technique élaborant les paramètres primaires dudit signal et un système de pistage et d'analyse permettant la caractérisation de ladite antenne à partir desdits paramètres primaires, ledit système de pistage et d'analyse comportant au moins une fonction de tri en blocs cohérents permettant de regrouper lesdites impulsions par blocs, une fonction d'analyse desdits blocs, une fonction de création des pistes et d'association des blocs à ces pistes et une fonction de suivi et d'analyse des pistes, caractérisé en ce que la fonction d'analyse des blocs est adaptée à mettre en oeuvre le procédé tel que décrit précédemment.

Dans une variante de réalisation ledit réseau d'antennes comporte au moins deux antennes disposées sur un cercle de rayon donné, ledit cercle étant situé dans un plan de référence.

Dans une variante de réalisation les directions de pointage des antennes dudit réseau suivent une équirépartition angulaire.

D'autres caractéristiques et avantages de la présente invention apparaîtront mieux à la lecture de la description qui suit en relation aux dessins annexés qui représentent :

La figure 1, un réseau d'antennes de goniométrie d'amplitude,

La figure 2, un diagramme des puissances délivrées par les antennes du réseau,

La figure 3, un schéma illustrant l'influence de la directivité d'une antenne d'émission statique,

La figure 4, un schéma illustrant l'influence de la directivité d'une antenne d'émission effectuant un mouvement de rotation,

La figure 5, un schéma illustrant l'influence du sens de rotation d'une antenne d'émission pour une variation croissante dans le temps de la direction d'arrivée,

La figure 6, un schéma illustrant l'influence du sens de rotation d'une antenne d'émission pour une variation décroissante dans le temps de la direction d'arrivée,

La figure 7, un synoptique d'une architecture d'un système de détection de radars,

La figure 8, un synoptique d'un système de pistage et d'analyse des paramètres primaires selon l'invention,

La figure 9, un synoptique du procédé d'analyse selon l'invention permettant d'estimer le sens de rotation d'une antenne à partir de la direction d'arrivée,

La figure 10, un diagramme schématisant l'évolution de la direction d'arrivée et du niveau du signal reçu,

La figure 11, un synoptique d'une variante de réalisation du procédé selon l'invention utilisant en plus le niveau du signal reçu,

La figure 12, un schéma d'une utilisation possible du procédé selon l'invention.

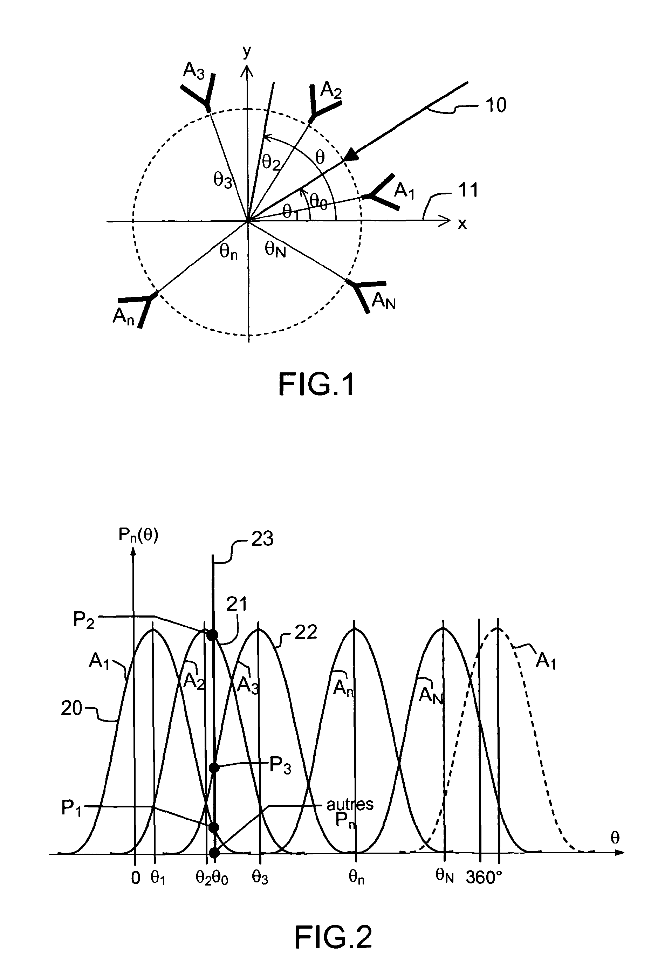

La figure 1 représente un réseau d'antennes $\{A_n\}_{1 < n \leq N}$ disposées sur un cercle compris dans un plan d'intérêt de la mesure, par exemple un plan horizontal, et mettant en oeuvre un procédé de goniométrie d'amplitude afin d'estimer la direction d'arrivée 10 d'une onde émise par une antenne rayonnante située dans l'environnement dudit réseau. Chaque antenne du réseau est positionnée de façon à ce que sa direction de pointage fasse un angle $\theta_i$ avec un axe x de référence 11. Le signal reçu présente, quant à lui, une direction d'arrivée 10 d'angle $\theta_0$. Les angles $\theta_i$ et $\theta_0$ sont des angles en azimut.

La figure 2 schématise, par le biais des diagrammes d'antennes 20, 21, 22, également appelés gains d'antennes, les puissances relatives délivrées par les N antennes en fonction de la direction de pointage 23 donnée par l'angle en azimut $\theta$. L'antenne du réseau dont l'axe est le plus proche de la direction d'arrivée $\theta_0$ du signal reçu délivre au récepteur la puissance la plus importante et, à l'inverse, celle dont l'axe est le plus éloigné de la direction d'arrivée $\theta_0$ délivrera la puissance la plus faible. L'exemple de la figure 2 illustre ce principe, l'antenne $A_2$ représentée par son diagramme d'antenne 21 présente la puissance $P_2$ la plus élevée dans la direction $\theta_0$, suivie des antennes $A_3$ et $A_1$. La mesure de l'angle d'arrivée $\theta_0$ est estimée à partir des N puissances $P_n$, $1 < n \leq N$ délivrées par les N antennes du réseau au récepteur : $\hat{\theta}_0 = f(P_1,,.., P_n,...P_N)$. Ce raisonnement tient à la supposition d'une illumination uniforme du réseau par le signal, ce qui n'est plus vrai si la taille du réseau fait que chaque antenne de celui-ci voit l'antenne d'émission sous un angle légèrement différent, mais suffisant pour percevoir une différence de gain de l'antenne d'émission. En effet, la distribution de puissance $\{P_n\}_{n=1,...,N}$ délivrée en sortie du réseau est liée à celle obtenue par le réseau illuminé de façon uniforme, pondérée par la directivité de l'antenne d'émission $\{w_n\}_{n=1,...,N}$. Cette pondération est d'autant plus marquée que l'antenne d'émission illumine le réseau sur les flancs de son lobe principal, là où les variations de gain sont très fortes.

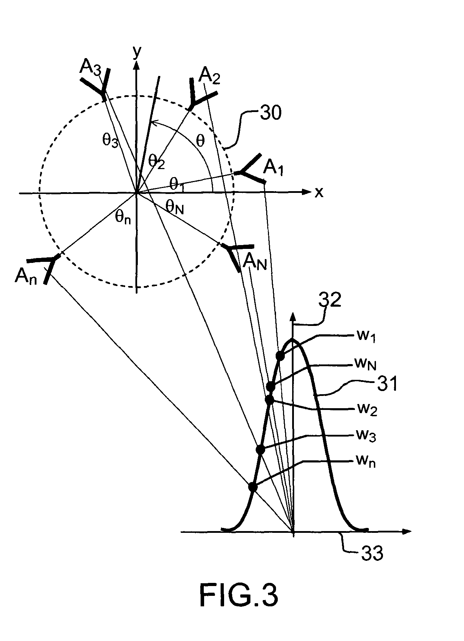

La figure 3 illustre l'illumination d'un réseau d'antennes 30 associé à un récepteur effectuant un traitement de goniométrie et comprenant N antennes $\{A_n\}_{1 < n \leq N}$ disposées sur un cercle, par une antenne directive émettrice située dans un plan de référence 33 et pointant dans une direction donnée 32. Ladite antenne émettrice est ici représentée par son diagramme d'antenne 31. Chacune des antennes $A_n$ dudit réseau 30 est illuminée par un signal pondéré par le gain de directivité $w_n$ du diagramme 31 de l'antenne émettrice.

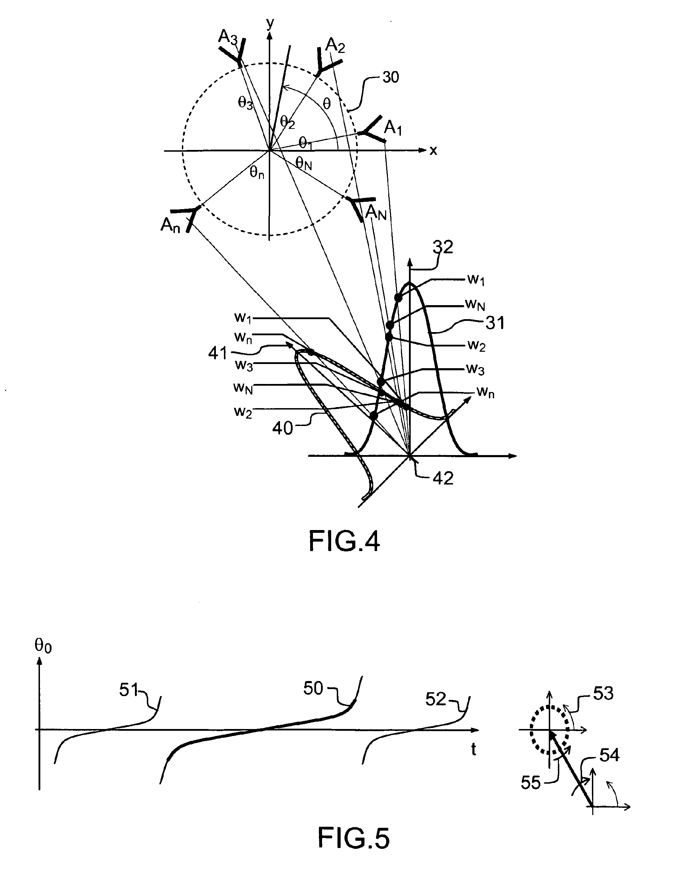

La figure 4 illustre le même principe lorsque ladite antenne directive émettrice pivote sur son axe 42, offrant alors une direction de pointage 32, 41 qui balaie le réseau d'antennes récepteur 30 de gauche à droite ou inversement en fonction du sens de rotation de ladite antenne émettrice. A titre d'exemple, la figure 4 schématise la direction de pointage 32, 41 de l'antenne à deux instants différents. Le gain de directivité $w_n$ du diagramme d'antenne 31, 40 de l'antenne émettrice à chacun desdits instants est par conséquent différent et va affecter le signal reçu par chacune des antennes $A_n$ du réseau 30 avec une pondération différente. Ce phénomène va influer sur l'estimation de la direction d'arrivée obtenue par goniométrie d'amplitude en réception qui va suivre une variation dans le temps permettant d'obtenir une information sur le sens de rotation de l'antenne d'émission.

La figure 5 schématise l'évolution dans le temps de la direction d'arrivée $\theta_0$ estimée par un dispositif de mesure selon l'invention pour un sens de rotation 54 de l'antenne d'émission égal à l'inverse du sens positif trigonométrique 53. La valeur estimée de $\theta_0$ 50, 51, 52 croît quasi linéairement autour de sa valeur moyenne au fur et à mesure que le signal émis rayonné par l'antenne émettrice balaie le réseau d'antennes récepteur dans le sens croissant des valeurs de $\theta_0$ 55, c'est-à-dire le sens trigonométrique 53 dans l'exemple considéré. Les trois courbes 50, 51, 52 visibles sur la figure 5 correspondent respectivement à une estimation par goniométrie d'amplitude effectuée sur le lobe principal 50 du signal reçu et sur les lobes secondaires 51, 52. Dans la pratique et pour des raisons de sensibilité du goniomètre d'amplitude et de niveau trop faible du signal sur les lobes secondaires, les mesures de direction d'arrivée se font, de préférence, sur le lobe principal 50 du signal reçu.

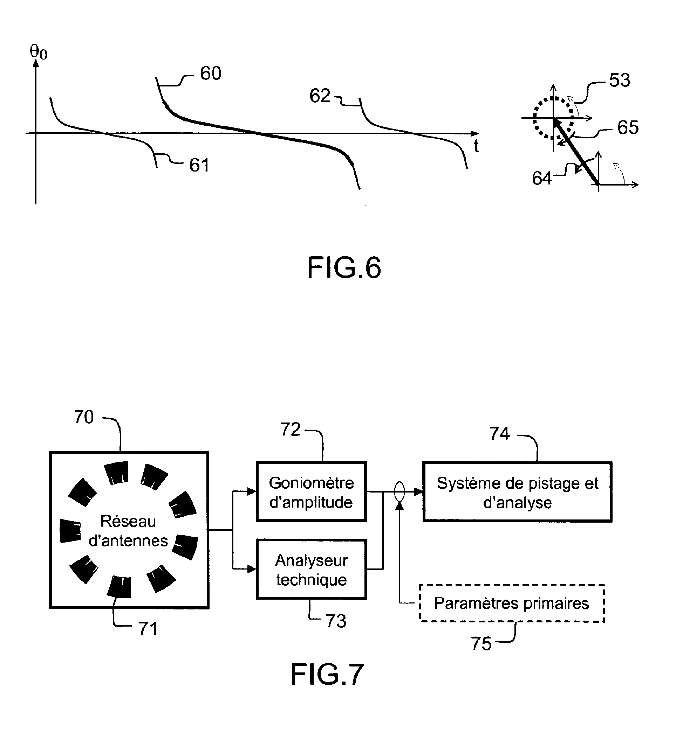

La figure 6 schématise l'évolution dans le temps de la direction d'arrivée $\theta_0$ estimée 60, 61, 62 mais cette fois pour un sens de rotation de l'antenne d'émission 64 égal au sens positif trigonométrique 53. Cette fois, $\theta_0$ décroît quasi linéairement autour de sa valeur moyenne indiquant par ce fait que le signal rayonné par l'antenne émettrice balaie le réseau récepteur dans le sens décroissant 65 des valeurs de $\theta_0$, c'est-à-dire le sens inverse trigonométrique dans l'exemple considéré. Pour les mêmes raisons que celles mentionnées en support de la figure 5, les mesures de direction d'arrivée se font, de préférence, sur le lobe principal 60 du signal reçu.

La figure 7 représente un dispositif de détecteur de radars implémentant des moyens pour exécuter le procédé selon l'invention. Un réseau d'antennes 70 comportant N antennes 71 réparties sur un cercle de rayon fixé et situé dans un plan de référence est utilisé pour acquérir le signal reçu, rayonné par une ou plusieurs antennes électromagnétiques situées dans l'environnement dudit réseau 70. Ledit signal est reçu sous forme d'impulsions qui sont ensuite traitées, d'une part, par un dispositif de goniométrie d'amplitude 72 qui délivre en sortie une courbe de variation de la direction d'arrivée $\theta_0$ en fonction du temps, du type de celle représentée aux figures 5 et 6, et d'autre part, par un dispositif d'analyse technique 73 qui permet d'élaborer l'ensemble des paramètres primaires 75 relatifs à une impulsion donnée. Lesdits paramètres primaires 75 incluent, entre autres, la fréquence de l'impulsion, sa largeur, son niveau et son instant d'arrivée. Enfin un système de pistage et d'analyse 74 permet d'isoler des pistes caractéristiques d'un ou plusieurs émetteurs radar.

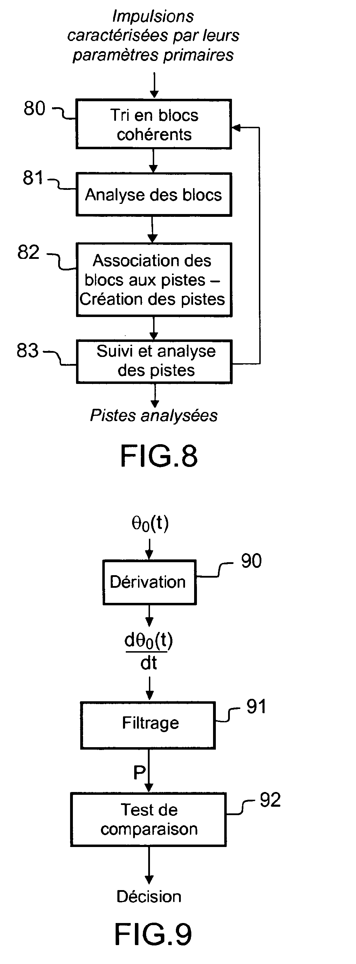

La figure 8 détaille les étapes mises en oeuvre par ledit système de pistage et d'analyse 74. Les impulsions de signal, caractérisées par leurs paramètres primaires sont envoyées, au fur et à mesure de leur réception, vers une fonction de tri en blocs cohérents 80 qui les regroupe par similitude pour former des blocs cohérents. Un bloc cohérent est un ensemble d'impulsions censées appartenir au même émetteur et a de surcroît une vocation à être rempli durant une illumination relative au passage d'un lobe d'antenne de l'émetteur. Ensuite, une fonction d'analyse des blocs 81 selon l'invention a pour but de caractériser l'émission contenue dans un bloc donné, notamment en fonction de sa direction d'arrivée et du sens de rotation de l'antenne émettrice. Puis, une fonction d'association des blocs aux pistes et de création des pistes 82 effectue une comparaison de la caractérisation d'un bloc donné avec celle d'une piste déjà existante et décide de l'y associer ou au contraire de créer une nouvelle piste le cas échéant. Enfin une fonction de suivi et d'analyse des pistes 83 a pour but de caractériser les paramètres qui sont nécessairement acquis dans le temps, sur plusieurs passages de lobe de l'antenne émettrice. Cette fonction délivre les pistes analysées et réactualise les paramètres de filtrage de la fonction de tri en blocs cohérents 80 en fonction des évolutions des émissions et de leur topologie.

Le procédé selon l'invention de détermination du sens de rotation de l'antenne émettrice est mis en oeuvre par le module d'analyse des blocs 81 qui établit que la direction d'arrivée estimée $\theta_0$ est distribuée dans le temps avec une pente de variation moyenne positive ou négative. Si celle-ci est positive, alors la rotation de l'antenne de l'émetteur se fait dans le sens décroissant du sens utilisé pour mesurer $\theta_0$, par exemple le sens trigonométrique. Au contraire, si la pente de variation est négative, alors la rotation se fait dans le sens croissant des $\theta_0$.

La figure 9 schématise les étapes du procédé selon l'invention mis en oeuvre par le module d'analyse des blocs 81. L'ensemble des valeurs mesurées de la direction d'arrivée estimée $\theta_0$ sur une fenêtre temporelle localisée sur le lobe principal du signal reçu est fourni à un module de dérivation 90 qui produit en sortie l'ensemble des dérivées $\dfrac{d\theta_0(t)}{dt}$ en fonction du temps des valeurs $\theta_0$. Un module de filtrage 91 délivre une estimation P de la pente de la droite $\theta_0(t)$ en éliminant le bruit qui entache les valeurs mesurées de $\theta_0$. Ledit module de filtrage 91 peut mettre en oeuvre, par exemple, un calcul de la valeur moyenne, ou un filtrage passe-bas. Enfin un module de décision 92 effectue le test suivant, à partir de la valeur P obtenue et d'un seuil prédéterminé S, entier positif :

> Si P> S, le sens de rotation de l'antenne émettrice est égal au sens des $\theta_0$ décroissants,
> Si P< -S, le sens de rotation de l'antenne émettrice est égal au sens des $\theta_0$ croissants,
> Si -S $\leq$ P $\leq$ S, aucune décision n'est prise.

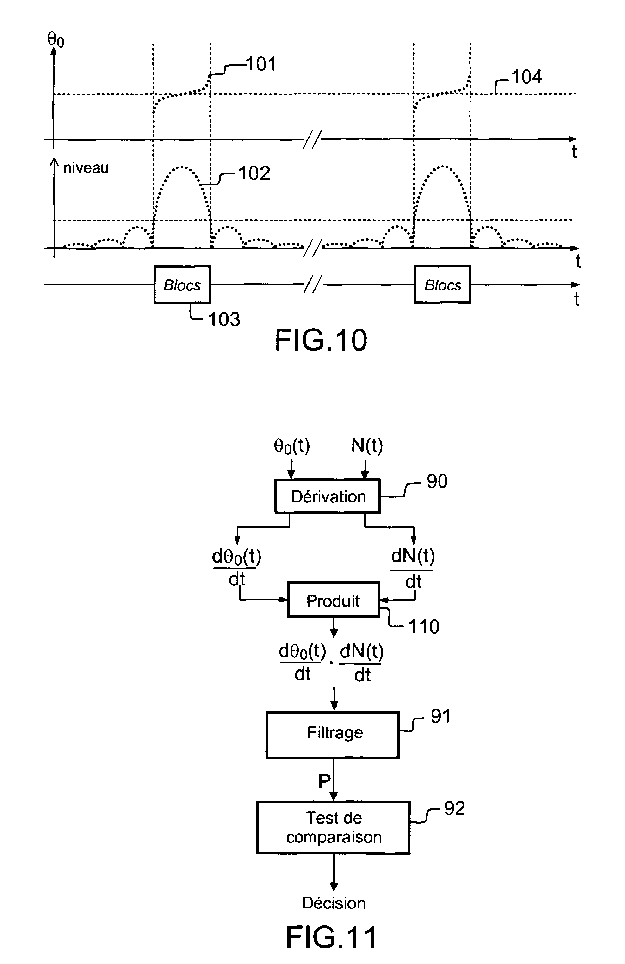

Dans une variante de réalisation, le procédé selon l'invention utilise, en plus de l'information de direction d'arrivée, une information de niveau ou amplitude 102 du signal reçu dont l'évolution est corrélée à celle de la direction d'arrivée 101 sur l'horizon d'un bloc cohérent 103 comme le montre la figure 10. Cette information peut être utilisée afin d'améliorer la fiabilité de l'estimation produite. En effet, la forme du lobe principal de la courbe de niveau 102 suit le mouvement caractéristique de rotation de l'antenne émettrice. Lorsque la direction de ladite antenne se rapproche de la direction de pointage moyenne 104, la courbe de niveau 102 croît jusqu'à atteindre son maximum puis décroît lorsque l'antenne continue sa rotation en éloignant sa direction de pointage de la direction moyenne 104. L'information de niveau 102 peut donc être utilisée conjointement à celle d'angle d'arrivée 101 afin d'améliorer l'estimation mise en oeuvre par le procédé selon l'invention.

La figure 11 schématise cette variante de réalisation du procédé. La mesure du niveau du signal N(t) sur le bloc d'impulsions considéré est fourni, en plus de la mesure de $\theta_0$(t) au module de dérivation 90 qui délivre en sortie deux séries de valeurs correspondant aux dérivées temporelles $\dfrac{d\theta_0(t)}{dt}$ et $\dfrac{dN(t)}{dt}$. Un module 110 effectue le calcul du produit des dérivées temporelles de l'angle d'arrivée et du niveau puis le résultat est transmis au module de filtrage 91 et au module de décision 92 qui effectuent les mêmes traitements que ceux décrits à la figure 9.

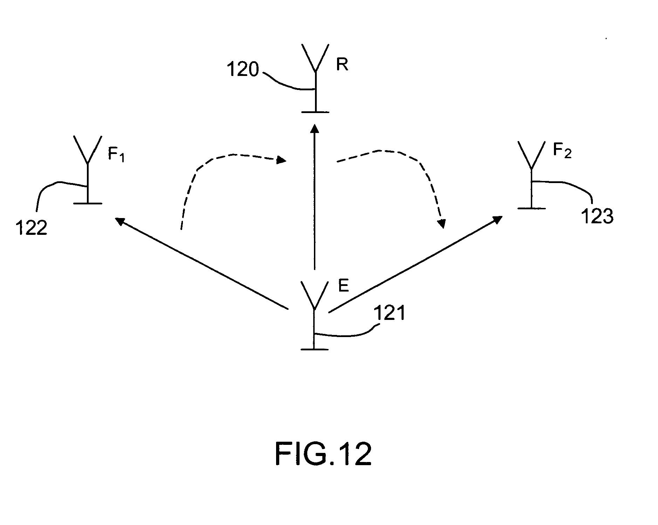

Le procédé et le dispositif selon l'invention présentent notamment les avantages suivants, ils permettent d'estimer le sens de rotation d'une antenne rayonnante sur un intervalle de temps donné et peuvent s'appliquer a toute source émettrice utilisant une antenne de direction de pointage variable, en particulier un radar. L'invention permet notamment de cartographier les zones de couverture d'une antenne rayonnant une émission et en particulier de détecter l'illumination par ladite antenne de cibles dont la position est connue. Cette utilisation du procédé selon l'invention est illustrée à la figure 12. Un système de détection 120 adapté à mettre en oeuvre des moyens pour exécuter le procédé selon l'invention, permet de détecter le sens de rotation de l'antenne rayonnante 121. A partir de cette information, le système 120 peut en déduire que la cible 122 vient d'être illuminée par le signal émis par l'antenne 121 et que la cible 123 va être illuminée dans un futur proche par le même signal. Cette déduction est faite en ayant la connaissance des positions des cibles 122 et 123 qui peuvent être, par exemple, des cibles amies faisant partie d'un même réseau déployé. Une alerte peut être levée par le système 120 afin de prévenir la future illumination de la cible 123 par l'antenne 122.

## Revendications

1. Procédé de mesure du sens de rotation d'une antenne directive (32,41) rayonnant un signal, ledit signal étant reçu, par un réseau (30,70) comportant au moins deux antennes (71), sous forme d'impulsions aux instants $t_i$ respectifs, lesdites impulsions étant regroupées au sein d'un bloc cohérent contenant K impulsions, **caractérisé en ce qu'**il comporte au moins les étapes suivantes :

   > déterminer, pour chaque impulsion reçue à l'instant $t_i$, une estimée $\hat{\theta}_0(t_i)$ de l'angle de direction d'arrivée $\theta_0$ du signal émis par ladite antenne directive à partir des puissances délivrées par les antennes (71) dudit réseau (30,70)
   > déterminer pour chaque valeur $\hat{\theta}_0(t_i)$ obtenue, sa dérivée temporelle $\dfrac{d\hat{\theta}_0(t_i)}{dt}$,

   > déterminer une estimée P de la pente de la droite $\theta_0(t)$ sur au moins un sous ensemble d'impulsions dudit bloc via le calcul de la moyenne des dérivées temporelles $\dfrac{d\hat{\theta}_0(t_i)}{dt}$ obtenues précédemment :

   $$P = \frac{1}{K}\sum_{i=0}^{K}\frac{d\hat{\theta}_0(t_i)}{dt},$$

   > effectuer le test de décision suivant où S est un entier positif,

   o Si P > S, le sens de rotation de ladite antenne directive est celui des $\theta_0$ décroissants,
   o Si P < -S, le sens de rotation de la dite antenne directive est celui des $\theta_0$ croissants.

2. Procédé selon la revendication 1, **caractérisé en ce que** les valeurs $\dfrac{d\hat{\theta}_0(t_i)}{dt}$ sont filtrées par un filtre passe-bas dont la fonction est de limiter le bruit.

**3.** Procédé selon l'une des revendications précédentes, **caractérisé en ce qu'**il comporte en plus les étapes suivantes :

> déterminer, pour chaque impulsion reçue à l'instant $t_i$, une mesure du niveau $N(t_i)$ du signal reçu,

> déterminer pour chaque valeur $N(t_i)$ obtenue,

sa dérivée temporelle $\dfrac{dN(t_i)}{dt}$ ,

➢ remplacer chaque valeur de la dérivée temporelle $\dfrac{d\,\hat{\theta}_0(t_i)}{dt}$ par sa version pondérée par la dérivée temporelle du niveau

$\dfrac{d\,\hat{\theta}_0(t_i)}{dt} \cdot \dfrac{dN(t_i)}{dt}$ avant d'effectuer le calcul de moyenne permettant d'obtenir la quantité P.

**4.** Procédé selon l'une des revendications précédentes **caractérisé en ce que** les antennes dudit réseau (30,70) sont disposées sur un cercle de rayon donné et situé dans un plan de référence.

**5.** Procédé selon l'une des revendications précédentes **caractérisé en ce que** les directions de pointage des antennes dudit réseau (30,70) suivent une équirépartition angulaire.

**6.** Système de mesure du sens de rotation d'une antenne directive rayonnant un signal sous forme d'impulsions comportant au moins les éléments suivants, un réseau d'antennes (30,70), un dispositif de goniométrie d'amplitude (72), un analyseur technique (73) élaborant les paramètres primaires (75) dudit signal et un système de pistage et d'analyse (74) permettant la caractérisation de ladite antenne à partir desdits paramètres primaires (75), ledit système de pistage et d'analyse (74) comportant au moins une fonction de tri en blocs cohérents (80) permettant de regrouper lesdites impulsions par blocs, une fonction d'analyse desdits blocs (81), une fonction de création des pistes et d'association des blocs à ces pistes (82) et une fonction de suivi et d'analyse des pistes (83), **caractérisé en ce que** la fonction d'analyse des blocs (81) est adaptée à mettre en oeuvre le procédé selon l'une des revendications 1 à 5.

**7.** Système de détection selon la revendication 6 **caractérisé en ce que** ledit réseau d'antennes (30,70) comporte au moins deux antennes disposées sur un cercle de rayon donné, ledit cercle étant situé dans un plan de référence.

**8.** Système de détection selon la revendication 7 **caractérisé en ce que** les directions de pointage des antennes dudit réseau (30,70) suivent une équirépartition angulaire.

**Claims**

**1.** A process for measuring the direction of rotation of a directional antenna (32, 41) radiating a signal, said signal being received, by an array (30, 70) comprising at least two antennae (71), in the form of pulses at respective times $t_i$, said pulses being grouped within a coherent block containing K pulses, **characterised in that** it comprises at least the following steps:

➢ determining, for each pulse received at time $t_i$, an estimate $\hat{\theta}_0(t_i)$ of the arrival direction angle $\theta_0$ of the signal emitted by said directional antenna from the powers provided by the antennae (71) of said array (30, 70);

➢ determining, for each obtained value $\hat{\theta}_o(t_i)$, its time derivative $\dfrac{d\,\hat{\theta}_0(t_i)}{dt}$ ;

➢ determining an estimate P of the slope of the straight line $\theta_o(t)$ on at least one sub-set of pulses of said block by calculating the average of the time derivatives $\dfrac{d\,\hat{\theta}_0(t_i)}{dt}$ obtained previously: $P = \dfrac{1}{K}\sum_{i=0}^{K}\dfrac{d\,\hat{\theta}_0(t_i)}{dt}$ ;

➢ performing the following decision test, where S is a positive integer:

° if P > S, the direction of rotation of said directional antenna is that of the decreasing $\theta_0$ values;
° if P < -S, the direction of rotation of said directional antenna is that of the increasing $\theta_0$ values.

**2.** The process according to claim 1, **characterised in that** the values $\dfrac{d\,\hat{\theta}_0(t_i)}{dt}$ are filtered by a low pass filter, the function of which is to limit noise.

**3.** The process according to any one of the preceding claims, **characterised in that** it further comprises the following steps:

> determining, for each pulse received at the time $t_i$, a measurement of the level $N(t_i)$ of the received signal;

> determining, for each obtained value $N(t_i)$, its time derivative $\dfrac{dN(t_i)}{dt}$;

> replacing each value of the time derivative $\dfrac{d\,\hat{\theta}_0(t_i)}{dt}$ with its version weighted by the time derivative of the level $\dfrac{d\,\hat{\theta}_0(t_i)}{dt} \cdot \dfrac{dN(t_i)}{dt}$ before calculating the average for obtaining the quantity P.

4. The process according to any one of the preceding claims, **characterised in that** the antennae of said array (30, 70) are arranged in a circle having a given radius and being located in a reference plane.

5. The process according to any one of the preceding claims, **characterised in that** the pointing directions of the antennae of said array (30, 70) follow an angular equi-distribution.

6. A system for measuring the direction of rotation of a directional antenna radiating a signal in the form of pulses, comprising at least the following elements: an array of antennae (30, 70), an amplitude goniometry device (72), a technical analyser (73) developing the primary parameters (75) of said signal and a tracking and analysing system (74) allowing the characterisation of said antenna from said primary parameters (75), said tracking and analysing system (74) comprising at least a coherent blocks (80) sorting function which allows said pulses to be grouped into blocks, a function for analysing said blocks (81), a function for creating tracks and for associating the blocks to said tracks (82) and a function for monitoring and analysing the tracks (83), **characterised in that** the function for analysing the blocks (81) is adapted to implement the process according to any one of claims 1 to 5.

7. The detection system according to claim 6, **characterised in that** said array of antennae (30, 70) comprises at least two antennae arranged in a circle having a given radius, said circle being located in a reference plane.

8. The detection system according to claim 7, **characterised in that** the pointing directions of the antennae of said array (30, 70) follow an angular equi-distribution.

**Patentansprüche**

1. Verfahren zum Messen der Drehrichtung einer ein Signal abstrahlenden Richtantenne (32, 41), wobei das Signal von einem Feld (30, 70) mit wenigstens zwei Antennen (71) in Form von Impulsen zu den jeweiligen Zeitpunkten $t_i$ empfangen wird, wobei die Impulse innerhalb eines kohärenten Blocks mit K Impulsen gruppiert wird, **dadurch gekennzeichnet, dass** es wenigstens die folgenden Schritte beinhaltet:

> Ermitteln, für jeden zum Zeitpunkt $t_i$ empfangenen Impuls, einer Schätzung $\hat{\theta}_0(t_i)$ des Ankunftsrichtungswinkels $\theta_0$ des von der Richtantenne emittierten Signals anhand der Leistungen von den Antennen (71) des Feldes (30, 70);
> Ermitteln, für jeden erhaltenen Wert $\hat{\theta}_0(t_i)$, seiner Zeitableitung $\dfrac{d\,\hat{\theta}_0(t_i)}{dt}$;

> Ermitteln einer Schätzung P des Gefälles der Geraden $\theta_0(t)$ an wenigstens einer Teilmenge von Impulsen des Blocks durch Berechnen des Mittels der Zeitableitungen $\dfrac{d\,\hat{\theta}_0(t_i)}{dt}$, die zuvor erhalten wurden: $P = \dfrac{1}{K}\sum_{i=0}^{K}\dfrac{d\,\hat{\theta}_0(t_i)}{dt}$;

> Durchführen des folgenden Entscheidungstests, wobei S eine positive ganze Zahl ist:

    ° wenn P > S, dann ist die Drehrichtung der Richtantenne die der abnehmenden $\theta_0$-Werte;
    ° wenn P < -S, dann ist die Drehrichtung der Richtantenne die der zunehmenden $\theta_0$-Werte.

2. Verfahren nach Anspruch 1, **dadurch gekennzeichnet, dass** die Werte $\dfrac{d\,\hat{\theta}_0(t_i)}{dt}$ von einem Tiefpassfilter gefiltert werden, dessen Funktion die Rauschbegrenzung ist.

3. Verfahren nach einem der vorherigen Ansprüche, **dadurch gekennzeichnet, dass** es ferner die folgenden Schritte beinhaltet:

➢ Ermitteln, für jeden zum Zeitpunkt $t_i$ empfangenen Impuls, eines Messwertes für den Pegel $N(t_i)$ des empfangenen Signals;
➢ Ermitteln für jeden erhaltenen Wert $N(t_i)$ seine

Zeitableitung $\dfrac{dN(t_i)}{dt}$ ;

➢ Ersetzen jedes Wertes der Zeitableitung

$\dfrac{d\hat{\theta}_0(t_i)}{dt}$ durch seine durch die Zeitableitung

des Pegels $\dfrac{d\hat{\theta}_0(t_i)}{dt} \cdot \dfrac{dN(t_i)}{dt}$ gewichtete

Version vor dem Berechnen des Mittels, so dass die Menge P erhalten werden kann.

4. Verfahren nach einem der vorherigen Ansprüche, **dadurch gekennzeichnet, dass** die Antennen des Feldes (30, 70) auf einem Kreis mit einem gegebenen Radius, der sich in einer Referenzebene befindet, angeordnet sind.

5. Verfahren nach einem der vorherigen Ansprüche, **dadurch** gekenntzeichnet, dass die Zeigerichtungen der Antennen des Feldes (30, 70) einer gleichen Winkelverteilung folgen.

6. System zum Messen der Drehrichtung einer ein Signal in Form von Impulsen abstrahlenden Richtantenne, das wenigstens die folgenden Elemente beinhaltet: ein Feld von Antennen (30, 70), eine Amplitudengoniometrievorrichtung (72), einen technischen Analysator (73) zum Ausarbeiten der primären Parameter (75) des Signals und ein Verfolgungs- und Analysesystem (74), das die Charakterisierung der Antenne anhand der primären Parameter (75) zulässt, wobei das Verfolgungs- und Analysesystem (74) wenigstens eine Kohärente-Blöcke-Sortierfunktion (80), die eine Umgruppierung der Impulse nach Blöcken zulässt, eine Funktion zum Analysieren der Blöcke (81), eine Funktion zum Erzeugen von Bahnen und zum Zuordnen der Blöcke zu den Bahnen (82) und eine Funktion zum Überwachen und Analysieren der Bahnen (83) umfasst, **dadurch gekennzeichnet, dass** die Funktion zum Analysieren der Blöcke (81) so ausgelegt ist, dass sie das Verfahren nach einem der Ansprüche 1 bis 5 implementiert.

7. Detektionssystem nach Anspruch 6, **dadurch gekennzeichnet, dass** das Antennenfeld (30, 70) wenigstens zwei Antennen umfasst, die auf einem Kreis mit einem gegebenen Radius angeordnet sind, wobei sich der Kreis in einer Referenzebene befindet.

8. Detektionssystem nach Anspruch 7, **dadurch gekennzeichnet, dass** die Zeigerichtungen der Antennen des Feldes (30, 70) einer gleichen Winkelverteilung folgen.

FIG.1

FIG.2

FIG.3

FIG.4

FIG.5

FIG.6

FIG.7

*Impulsions
caractérisées par leurs
paramètres primaires*

80 — Tri en blocs
cohérents

81 — Analyse des blocs

82 — Association des
blocs aux pistes –
Création des pistes

83 — Suivi et analyse
des pistes

*Pistes analysées*

# FIG.8

$\theta_0(t)$

Dérivation — 90

$$\frac{d\theta_0(t)}{dt}$$

Filtrage — 91

P

Test de
comparaison — 92

Décision

# FIG.9

## FIG.10

$\theta_0$

101

104

niveau

102

| Blocs | | Blocs |

103

## FIG.11

$\theta_0(t)$    $N(t)$

| Dérivation | 90 |

$\dfrac{d\theta_0(t)}{dt}$    $\dfrac{dN(t)}{dt}$

| Produit | 110 |

$\dfrac{d\theta_0(t)}{dt} \cdot \dfrac{dN(t)}{dt}$

| Filtrage | 91 |

P

| Test de comparaison | 92 |

Décision

## FIG.12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20010000123 A